# EUROPÄISCHE PATENTSCHRIFT

(11) **EP 3 653 353 B1**
(45) Veröffentlichungstag und Bekanntmachung des Hinweises auf die Patenterteilung: **28.07.2021**
(21) Anmeldenummer: 19208563.7
(22) Anmeldetag: 12.11.2019
(51) Int. Cl.: B27D 5/00, B29C 63/00

(54) **VORRICHTUNG UND VERFAHREN ZUM BESCHICHTEN EINES WERKSTÜCKS**
DEVICE AND METHOD FOR COATING A WORKPIECE
DISPOSITIF ET PROCÉDÉ DE REVÊTEMENT D'UNE PIÈCE

(30) Priorität: 13.11.2018 DE 102018128343
(43) Veröffentlichungstag der Anmeldung: 20.05.2020
(73) Patentinhaber: HOMAG GmbH, 72296 Schopfloch (DE)
(72) Erfinder: Ufer, Hans-Peter, 72280 Dornstetten (DE)
(74) Vertreter: Hoffmann Eitle

(56) Entgegenhaltungen:
- EP-A1- 2 347 873
- EP-A1- 2 412 501
- DE-A1- 2 827 127

## Beschreibung

### Technisches Gebiet

Die Erfindung betrifft eine Vorrichtung zum Beschichten eines Werkstücks, das bevorzugt zumindest abschnittsweise aus Holz, Holzwerkstoff, Kunststoff oder dergleichen besteht, nach dem Oberbegriff des Anspruchs 1.

### Stand der Technik

Im Bereich der Möbel- und Bauelementeindustrie werden Werkstücke, wie etwa Spanplatten üblicherweise an deren Oberfläche beschichtet. So werden beispielsweise im Bereich der Schmalflächen häufig Kanten aus unterschiedlichen Materialien und mit unterschiedlichen Dekoren angebracht.

Um eine möglichst feste und dauerhafte Verbindung zwischen dem Werkstück und dem Beschichtungsmaterial zu erzielen, wird die zu beschichtende Oberfläche des Werkstücks häufig vorgewärmt, bevor das Beschichtungsmaterial auf die erwärmte Oberfläche aufgebracht wird. Zu diesem Zweck ist es bekannt, dass entsprechende Beschichtungsvorrichtungen eine Erwärmungseinrichtung zum Erwärmen der zu beschichtenden Oberfläche des Werkstücks aufweisen.

Obgleich sich die bekannten Vorrichtungen zum Beschichten eines Werkstücks in der Praxis bewährt haben, gibt es aus ökologischer Sicht ein Bedürfnis, den Energieverbrauch bekannter Vorrichtungen weiter zu senken, ohne dabei die Qualität der Fügeverbindung zu beeinträchtigen.

Ferner offenbart die DE 2 827 127 A1 eine Vorrichtung zum Auftragen von Leim, die eine Heißluftdüse aufweist. Die EP 2 347 873 A1 offenbart ein Verfahren zur Beschichtung von Bauteilen, die einen Laser aufweist. Die EP 2 412 501 A1 offenbart eine Vorrichtung zur Beschichtung von Werkstücken, die eine Plasmaquelle aufweist.

Ferner offenbart die DE 28 27 127 A1 eine Vorrichtung zum Auftragen von Leim mit einer Heißluftquelle zum Erwärmen des Leims. Die EP 2 412 501 A1 offenbart eine Vorrichtung zum Beschichten von Werkstücken mit einer Plasmaquelle zum Erwärmen des Beschichtungsmaterials.

### Darstellung der Erfindung

Es ist daher Aufgabe der Erfindung, eine Vorrichtung der eingangs genannten Art bereitzustellen, die einen verminderten Energieeinsatz bei weiterhin hoher Qualität der Fügeverbindung ermöglicht. Ferner ist es Aufgabe der vorliegenden Erfindung, ein entsprechendes Verfahren zum Beschichten eines Werkstücks bereitzustellen.

Diese Aufgabe wird erfindungsgemäß durch eine Vorrichtung zum Beschichten eines Werkstücks nach Anspruch 1 sowie ein Verfahren zum Beschichten eines Werkstücks nach Anspruch 6 gelöst. Besonders bevorzugte Weiterbildungen der Erfindung sind in den abhängigen Ansprüchen angegeben.

Der Erfindung liegt der Gedanke zugrunde, bei der Erwärmungseinrichtung mit möglichst wenigen Strahlungselementen auszukommen, selbst wenn Werkstücke mit unterschiedlicher Werkstückhöhe bzw. unterschiedlicher Breite der zu beschichtenden Oberfläche zu beschichten sind. Im Stand der Technik war es üblich, zur Abdeckung unterschiedlicher Werkstückhöhen mehrere bzw. gegebenenfalls zahlreiche Strahlungselemente nebeneinander vorzusehen, die sich parallel zur Förderebene erstrecken. Demgegenüber sieht die vorliegende Erfindung vor, dass mindestens ein längliches Strahlungselement derart angeordnet ist, dass dessen Längsachse die Förderebene unter einem Winkel schneidet. Durch diese konstruktiv einfache Maßnahme kann die Anzahl der erforderlichen Strahlungselemente drastisch reduziert werden, was zu einem entsprechend reduzierten Energieverbrauch führt. In vielen Fällen lässt sich die Anzahl der erforderlichen Strahlungselemente und somit der Energieverbrauch um 50% reduzieren. Gleichzeitig bleibt die hohe Qualität der Fügeverbindung erhalten, und es ergeben sich noch weitere Vorteile. So ergibt sich eine insgesamt gleichmäßigere Erwärmung der zu beschichtenden Oberfläche des Werkstücks bzw. eines für das Beschichten verwendeten Haftmittels mit entsprechenden Vorteilen für die Qualität der Fügeverbindung. Auch wird der Eintrag von Wärme in die Gesamtvorrichtung reduziert, sodass beispielsweise die Fördereinrichtung oder das Beschichtungsaggregat weniger unerwünscht erwärmt werden.

Als Strahlungselement kommen erfindungsgemäß Infrarotstrahler und/oder LED-Stacks zum Einsatz. Diese haben sich als besonders energieeffizient und wirksam erwiesen.

Gemäß einer Weiterbildung der Erfindung ist vorgesehen, dass der Winkel mindesten fünf Grad beträgt, bevorzugt mindesten 10°, besonders bevorzugt höchstens20° Durch die geeignete Einstellung des Neigungswinkels des mindestens eines länglichen Strahlungselements kann sichergestellt werden, dass sich für die erwarteten Werkstückhöhen eine effizienter und zuverlässiger Beschichtungsvorgang ergibt, bei dem beispielsweise auch bei höheren Fördergeschwindigkeiten ein ausreichender Energieeintrag bzw. eine ausreichende Erwärmung der zu beschichtenden Oberfläche des Werkstücks stattfindet.

Dabei ist es besonders bevorzugt, dass mindestens ein längliches Strahlungselement schwenkbar ist, um den Winkel (α) zu verändern. Hierdurch lässt sich der Winkel (α) optimal an die Höhe des zu erwärmenden Werkstücks bzw. eines zu erwärmenden Haftmittel anpassen, woraus sich eine weiter gesteigerte Energieeffizienz bei weiterhin hoher Qualität der Fügeverbindung ergibt.

Der Winkel ist vorzugsweise derart ausgerichtet, dass das Werkstück im Zuge der Förderung zunächst mit seiner Oberseite in den Strahlungsbereich des mindestens einen Strahlungselements eintritt. Hierdurch wird eine gleichmäßige Durchwärmung der zu beschichtenden Oberflächen des Werkstücks erreicht und mit hoher Energieeffizienz gearbeitet, da die später auf der Unterseite des Werkstücks eingetragene Wärme innerhalb des Werkstücks nach oben steigt und ein Auskühlen der Oberseite verhindert wodurch die Energie nicht unmittelbar verloren geht.

Gemäß einer Weiterbildung der Erfindung ist ferner vorgesehen, dass das Beschichtungsaggregat eine Einrichtung zum Auftragen und/oder Aktivieren eines Haftmittels aufweist. Dadurch, dass die erfindungsgemäße Vorrichtung sowohl die Erwärmungseinrichtung als auch die Einrichtung zum Auftragen und/oder Aktivieren eines Haftmittels aufweist, lässt sich mit dem Betrieb der Erwärmungseinrichtung besonders wirksam und energieeffizient auf den unmittelbar nachfolgenden Beschichtungsvorgang abstimmen.

Dabei ist es besonders bevorzugt, dass das Beschichtungsaggregat eine Andrückeinrichtung zum Andrücken des Beschichtungsmaterials an das Werkstück aufweist, um insgesamt einen integralen Beschichtungsvorgang zu erreichen, der bei geringem Energieaufwand und zügiger Betriebsweise eine qualitativ hochwertige Fügeverbindung ermöglicht.

Das erfindungsgemäße Verfahren zum Beschichten eines Werkstücks, wie es in Patentanspruch 7 definiert ist, sieht vor, dass zunächst die zu beschichtende Oberfläche des Werkstücks vor und/oder nach dem Auftrag von Klebstoff mittels der Erwärmungseinrichtung erwärmt wird und anschließend ein Beschichtungsmaterial auf die erwärmte, zu beschichtende Oberfläche des Werkstücks mittels des Beschichtungsaggregats aufgebracht wird. Hierdurch lassen sich die oben genannten Vorteile der erfindungsgemäßen Vorrichtung besonders ausgeprägt und zuverlässig erzielen.

Besonders vorteilhaft ist das erfindungsgemäße Verfahren, wenn die Werkstückdicke bzw. die Breite der zu beschichtenden Oberfläche mindestens 28 mm beträgt. Denn gerade bei dickeren Werkstücken tritt ein starker Energieeinsparungseffekt auf, da die Anzahl der Strahler erfindungsgemäß reduziert oft halbiert werden kann.

Ferner ist gemäß einer Weiterbildung des erfindungsgemäßen Verfahrens vorgesehen, dass die Strahlbreite des mindestens einen Strahlers, gemessen quer zu dessen Längsachse, geringer ist als die Werkstückdicke bzw. die Breite der zu beschichtenden Oberfläche. Bei dieser Konstellation wird besonders der erfindungsgemäße Vorteil deutlich, wonach erst dank der erfindungsgemäßen Anordnung des mindestens einen länglichen Strahlungselements unter einem Winkel zur Förderebene ermöglicht wird, die gesamte Werkstückdicke zu erwärmen, obgleich die Strahlbreite des Strahlungselements im Grunde geringer ist.

Ferner ist gemäß einer Weiterbildung des erfindungsgemäßen Verfahrens vorgesehen, dass das Werkstück in der Mitte der zu beschichtenden Oberfläche stärker erwärmt wird als an deren Rändern. Hierdurch ergibt sich erneut sowohl eine Energieeinsparung als auch eine verbesserte Qualität der Fügeverbindung.

### Kurze Beschreibung der Zeichnungen

Fig. 1 zeigt schematisch eine Draufsicht einer Vorrichtung zum Beschichten eines Werkstücks gemäß einer Ausführungsform der Erfindung;
Fig. 2 zeigt schematisch eine Seitenansicht einer Vorrichtung zum Beschichten eines Werkstücks gemäß einer Ausführungsform der Erfindung;
Fig. 3 zeigt schematisch den Temperaturverlauf in einer zu beschichtenden Oberfläche, die nach dem Stand der Technik erwärmt wurde;
Fig. 4 zeigt schematisch den Temperaturverlauf in einer zu beschichtenden Oberfläche, die mittels der vorliegenden Erfindung erwärmt wurde;

### Ausführliche Beschreibung bevorzugter Ausführungsformen

Bevorzugte Ausführungsformen der Erfindung werden nachfolgend ausführlich unter Bezugnahme auf die begleitenden Zeichnungen beschrieben.

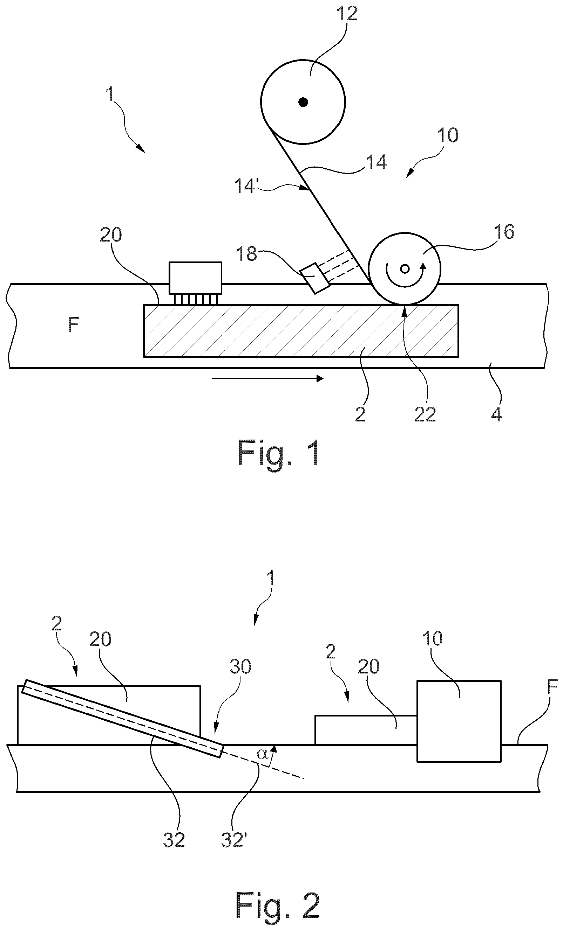

Eine Vorrichtung 1 zum Beschichten eines Werkstücks 2 ist in den Figuren 1 und 2 schematisch in einer Draufsicht bzw. einer Seitenansicht gezeigt, wobei Fig. 1 und Fig. 2 nicht exakt zueinander korrespondieren.

Die Beschichtungsvorrichtung 1 dient zum Beschichten eines Werkstücks 2, das in der vorliegenden Ausführungsform zumindest abschnittsweise aus Holz, Holzwerkstoff oder Kunststoff besteht, wie beispielsweise einem Möbelpaneel, einer Tür oder einem anderen Werkstück für die Möbel- und Bauelementeindustrie.

Die Beschichtungsvorrichtung 1 umfasst zunächst ein Beschichtungsaggregat 10 zum Aufbringen eines Beschichtungsmaterials 14 auf eine zu beschichtende Oberfläche 20 des Werkstücks 2. Bei dem Beschichtungsmaterial 14 kann es sich beispielsweise um ein Kantenmaterial aus Kunststoff oder Furnier oder anderen geeigneten Materialien wie Metall etc. handeln. Ferner kann das Beschichtungsmaterial 14 eine Funktionsschicht 14' aufweisen, die beispielsweise als Haftmittelschicht ausgestaltet sein kann. Diese Funktionsschicht 14' kann bereits vorab auf dem Beschichtungsmaterial 14 vorgesehen sein, kann aber gegebenenfalls auch noch in dem Beschichtungsaggregat 10 separat zugeführt und mit dem Beschichtungsmaterial 14 vereint werden.

Zur Aktivierung oder Reaktivierung der Funktionsschicht 14 umfasst das Beschichtungsaggregat 10 erfindungsgemäß eine LED-Einrichtung, und/oder einen Infrarotstrahler.

Alternativ oder zusätzlich kann das Beschichtungsaggregat 10 auch eine Einrichtung zum Auftragen eines Haftmittels aufweisen, obgleich dies in den Figuren nicht gezeigt ist. Bei der Einrichtung zum Auftragen eines Haftmittels kann es sich beispielsweise um eine Leimauftragswalze handeln, die mit Leim aus einem Leimvorrat versorgt wird, um diesen auf die zu fügende Oberfläche des Beschichtungsmaterials 14 aufzutragen.

Ferner umfasst das Beschichtungsaggregat 10 eine Andrückwalze 16, um das Beschichtungsmaterial 14 an die zu beschichtende Oberfläche 20 des Werkstücks 2 zur Erzielung einer festen und dauerhaften Verbindung anzudrücken.

Darüber hinaus umfasst die Beschichtungsvorrichtung 1 eine Fördereinrichtung 4, die in der vorliegenden Ausführungsform als Durchlauffördereinrichtung ausgestaltet ist und eine Förderebene F definiert, in welcher sich das Werkstück 2 in der in den Figuren 1 und 2 gezeigten Pfeilrichtung bewegt. Die vorliegende Erfindung ist jedoch nicht auf Durchlauffördereinrichtungen beschränkt. Ebenso ist es möglich, dass die Fördereinrichtung dazu dient, das Beschichtungsaggregat 10 zu bewegen, während das jeweilige Werkstück 2 ruht (sogenannte Stationärtechnik). Auch Kombinationen bzw. Mischformen beider Konzepte sind im Rahmen der vorliegenden Erfindung möglich.

Stromaufwärts des Beschichtungsaggregats umfasst die Beschichtungsvorrichtung 1 eine Erwärmungseinrichtung 30 zum Erwärmen der zu beschichtenden Oberfläche 20 des Werkstücks 2 bzw. eines auf der zu beschichtenden Oberfläche vorgesehenen Haftmittels (nicht gezeigt).

Die Erwärmungseinrichtung 30 umfasst erfindungsgemäß ein längliches Strahlungselement 32 in Form eines Infrarotstrahlers oder LED-Stacks, wobei auch andere Strahlungselemente zum Einsatz kommen können. Wie in Fig. 2 zu erkennen ist, ist das Strahlungselement 30 derart angeordnet, dass dessen Längsachse 32' die Förderebene F unter einem Winkel α schneidet. Dabei beträgt der Winkel α in der vorliegenden Ausführungsform ca. 15 Grad, wobei der Winkel durch Schwenken des länglichen Strahlungselements 32 auch einstellbar sein kann. Wie in Fig. 2 zu erkennen ist, ist der Winkel α derart ausgerichtet, dass das Werkstück 2 im Zuge der Förderung zunächst mit seiner Oberseite in den Strahlungsbereich des mindestens einen Strahlungselements 32 eintritt.

Der Betrieb der erfindungsgemäßen Vorrichtung 1 vollzieht sich beispielsweise wie folgt. Ein zu beschichtendes Werkstück 2 wird mittels der Fördereinrichtung F in Pfeilrichtung eingefördert und passiert die Erwärmungseinrichtung 30, sodass die zu beschichtende Oberfläche 20 des Werkstücks 2 erwärmt wird. Anschließend erreicht das Werkstück 2 die Beschichtungseinrichtung 10, durch welches ein Beschichtungsmaterial 14 auf die erwärmte, zu beschichtende Oberfläche 20 des Werkstücks 2 aufgebracht wird.

Dabei ermöglicht die geneigte Anordnung des Strahlungselements 32, dass trotz veränderlicher Höhe der Werkstücke 2 (vgl. Fig. 2) von beispielsweise 28 mm oder mehr stets eine gleichmäßige Erwärmung der zu beschichtenden Oberfläche 20 erzielt werden kann. Dieser Effekt kann erzielt werden, obgleich die effektive Strahlbreite des in Fig. 2 gezeigten Strahlers 2 geringer ist als die Werkstückdicke bzw. die Breite der zu beschichtenden Oberfläche 20.

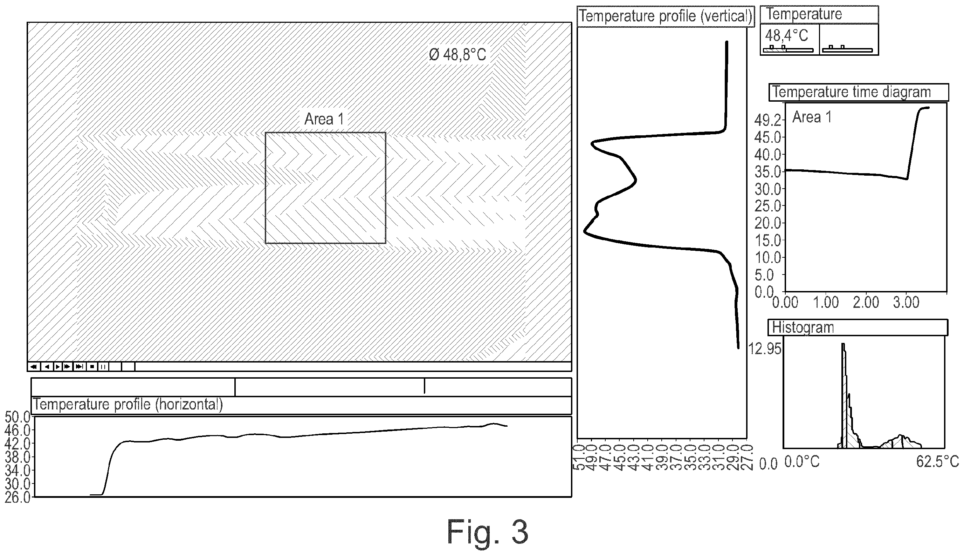

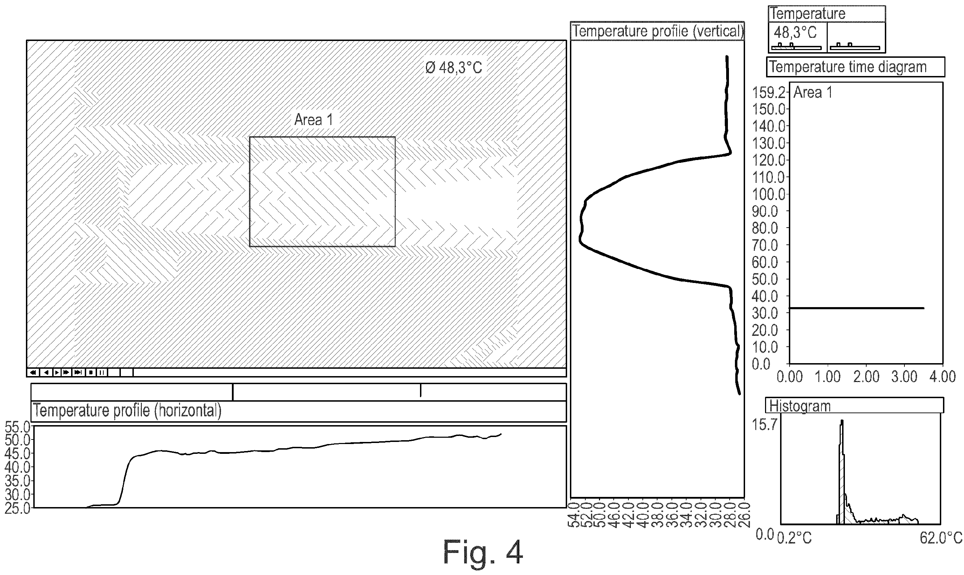

Im Ergebnis ermöglicht die Erfindung eine gleichmäßigere Erwärmung der zu beschichtenden Oberfläche des jeweiligen Werkstücks, was anhand der Figuren 3 und 4 ersichtlich ist. Fig. 3 zeigt den Temperaturverlauf in einer zu beschichtenden Oberfläche, die nach dem Stand der Technik mit zwei sich parallel zu Förderebene erstreckenden Strahlern erwärmt wurde. Man erkennt, dass die zu beschichtende Oberfläche insbesondere im Randbereich sehr stark erwärmt wurde, während die Werkstücktemperatur im Mittenbereich stark abfällt.

Fig. 4 zeigt demgegenüber schematisch den Temperaturverlauf in einer zu beschichtenden Oberfläche, die mittels der vorliegenden Erfindung erwärmt wurde. Es ist zu erkennen, dass sich ein deutlich gleichmäßigerer Temperaturverlauf - ohne Kaltzonen - ergibt, bei welchem auch die jeweiligen Ränder bzw. Oberflächen des Werkstücks nicht zu stark erhitzt werden.

## Patentansprüche

1. Vorrichtung (1) zum Beschichten eines Werkstücks (2), das bevorzugt zumindest abschnittsweise aus Holz, Holzwerkstoff, Kunststoff oder dergleichen bestehen, umfassend:
ein Beschichtungsaggregat (10) zum Aufbringen eines Beschichtungsmaterials (14) auf eine zu beschichtende Oberfläche (20) des Werkstücks (2),
eine Fördereinrichtung (4) zum Herbeiführen einer Relativbewegung zwischen dem Werkstück (2) und dem Beschichtungsaggregat (10), die eine Förderebene (F) definiert, und
eine Erwärmungseinrichtung (30) zum Erwärmen der zu beschichtenden Oberfläche (20) des Werkstücks (2), die mindestens ein längliches Strahlungselement (32) aufweist,
wobei mindestens ein längliches Strahlungselement (32) derart angeordnet ist, dass dessen Längsachse (32') die Förderebene (F) unter einem Winkel (α) schneidet, und
**dadurch gekennzeichnet, dass** ein längliches Strahlungselement (32) einen Infrarotstrahler und/oder einen LED-Stack aufweist.

2. Vorrichtung nach Anspruch 1, **dadurch gekennzeichnet, dass** der Winkel (α) mindestens 5° beträgt, bevorzugt mindestens 10°, besonders bevorzugt höchstens 20°, wobei vorzugsweise mindestens ein längliches Strahlungselement (32) schwenkbar ist, um den Winkel (α) zu verändern.

3. Vorrichtung nach Anspruch 1 oder 2, **dadurch gekennzeichnet, dass** der Winkel (α) derart ausgerichtet ist, dass das Werkstück (2) im Zuge der Förderung zunächst mit seiner Oberseite in den Strahlungsbereich des mindestens einen Strahlungselements (32) eintritt.

4. Vorrichtung nach einem der vorhergehenden Ansprüche, **dadurch gekennzeichnet, dass** das Beschichtungsaggregat (10) eine Einrichtung (18) zum Auftragen und/oder Aktivieren eines Haftmittels (14') aufweist.

5. Vorrichtung nach einem der vorhergehenden Ansprüche, **dadurch gekennzeichnet, dass** das Beschichtungsaggregat (10) eine Andrückeinrichtung (16) zum Andrücken des Beschichtungsmaterials (14) an das Werkstück (2) aufweist.

6. Verfahren zum Beschichten eines Werkstücks (2), das bevorzugt zumindest abschnittsweise aus Holz, Holzwerkstoff, Kunststoff oder dergleichen bestehen, unter Einsatz einer Vorrichtung nach einem der vorhergehenden Ansprüche, mit den Schritten:
Erwärmen der zu beschichtenden Oberfläche (20) des Werkstücks (2) und/oder eines zum Beschichten verwendeten Haftmittels mittels der Erwärmungseinrichtung (30), und
Aufbringen eines Beschichtungsmaterials (14) auf die erwärmte, zu beschichtende Oberfläche (20) des Werkstücks (2) mittels des Beschichtungsaggregats (10).

7. Verfahren nach Anspruch 6, **dadurch gekennzeichnet, dass** Werkstückdicke bzw. die Breite der zu beschichtenden Oberfläche (20) mindestens 28 mm beträgt.

8. Verfahren nach Anspruch 6 oder 7, **dadurch gekennzeichnet, dass** die Strahlbreite des mindestens einen Strahlers, gemessen quer zu dessen Längsachse, geringer ist als die Werkstückdicke bzw. die Breite der zu beschichtenden Oberfläche (20).

9. Verfahren nach einem der Ansprüche 6 bis 8, **dadurch gekennzeichnet, dass** das Werkstück in der Mitte der zu beschichtenden Oberfläche (20) stärker erwärmt wird als an deren Rändern.

## Claims

1. Device (1) for coating a workpiece (2) which preferably consists at least partially of wood, wood-based material, plastic or the like, comprising:
a coating unit (10) for applying a coating material (14) onto a surface to be coated (20) of the workpiece (2),
a conveyor device (4) for bringing about a relative movement between the workpiece (2) and the coating unit (10) which defines a conveying level (F), and
a heating device (30) for heating the surface to be coated(20) of the workpiece (2) which has at least one elongated radiation element (32),
wherein at least one elongated radiation element (32) is arranged in such a way that its longitudinal axis (32') intersects with the conveying level (F) at an angle (α), and **characterised in that** an elongated radiation element (32) comprises an infrared radiator and/or an LED stack.

2. Device according to claim 1, **characterised in that** the angle (α) is at least 5°, preferably at least 10°, particularly preferably at most 20°, wherein preferably at least one elongated radiation element (32) is swivelable in order to change the angle (α).

3. Device according to claim 1 or 2, **characterised in that** the angle (α) is oriented in such a way that during the course of being conveyed the workpiece (2) first enters into the radiation field of the at least one radiation element (32) with its upper side.

4. Device according to one of the preceding claims, **characterised in that** the coating unit (10) has a device (18) for applying and/or activating an adhesive agent (14').

5. Device according to one of the preceding claims, **characterised in that** the coating unit (10) has a pressing device (16) for pressing the coating material (14) onto the workpiece (2).

6. Method for coating a workpiece (2) which preferably consists at least partially of wood, wood-based material, plastic or the like using a device according to one of the preceding claims, with the steps:
heating the surface to be coated (20) of the workpiece (2) and/or an adhesive agent used for coating by means of the heating device (30), and
applying a coating material (14) to the heated surface to be coated (20) of the workpiece (2) by means of the coating unit (10).

7. Method according to claim 6, **characterised in that** the workpiece thickness or the width of the surface to be coated (20) is at least 28 mm.

8. Method according to claim 6 or 7, **characterised in that** the beam width of the at least one radiator, measured transversely to its longitudinal axis, is less than the workpiece thickness or the width of the surface to be coated(20).

9. Method according to one of the claims 6 to 8, **characterised in that** the workpiece is heated more intensely in the middle of the surface to be coated (20) than at its edges.

## Revendications

1. Dispositif (1) pour le revêtement d'une pièce à usiner (2) qui consiste de préférence au moins par sections en bois, en matériau dérivé du bois, en matière plastique ou similaires, comprenant :
un groupe de revêtement (10) pour l'application d'un matériau de revêtement (14) sur une surface (20) à revêtir de la pièce à usiner (2),
un appareil de transport (4) pour provoquer un mouvement relatif entre la pièce à usiner (2) et le groupe de revêtement (10) qui définit un plan de transport (F), et
un appareil de chauffage (30) pour le chauffage de la surface (20) à revêtir de la pièce à usiner (2) qui présente au moins un élément de rayonnement (32) oblong,
dans lequel au moins un élément de rayonnement (32) oblong est agencé de telle manière que son axe longitudinal (32') coupe le plan de transport (F) sous un angle (a), et
**caractérisé en ce qu'**un élément de rayonnement (32) oblong présente un émetteur à infrarouge et/ou une pile à DEL.

2. Dispositif selon la revendication 1, **caractérisé en ce que** l'angle (α) s'élève au moins à 5°, de préférence au moins à 10°, le plus préférentiellement au plus à 20°, dans lequel de préférence au moins un élément de rayonnement (32) oblong est pivotant afin de modifier l'angle (α).

3. Dispositif selon la revendication 1 ou 2, **caractérisé en ce que** l'angle (α) est orienté de telle manière que la pièce à usiner (2) entre au cours du transport tout d'abord avec son côté supérieur dans la plage de rayonnement de l'au moins un élément de rayonnement (32).

4. Dispositif selon l'une quelconque des revendications précédentes, **caractérisé en ce que** le groupe de revêtement (10) présente un appareil (18) pour l'application et/ou l'activation d'un agent adhésif (14').

5. Dispositif selon l'une quelconque des revendications précédentes, **caractérisé en ce que** ce que le groupe de revêtement (10) présente un appareil de pressage (16) pour le pressage du matériau de revêtement (14) contre la pièce à usiner (2).

6. Procédé de revêtement d'une pièce à usiner (2) qui consiste de préférence au moins par sections en bois, en matériau dérivé du bois, en matière plastique ou similaires, en utilisant un dispositif selon l'une quelconque des revendications précédentes, avec les étapes :
le chauffage de la surface (20) à revêtir de la pièce à usiner (2) et/ou d'un agent adhésif utilisé pour le revêtement au moyen de l'appareil de chauffage (30), et
l'application d'un matériau de revêtement (14) sur la surface (20) chauffée à revêtir de la pièce à usiner (2) au moyen du groupe de revêtement (10).

7. Procédé selon la revendication 6, **caractérisé en ce que** l'épaisseur de la pièce à usiner ou la largeur de la surface (20) à revêtir s'élève au moins à 28 mm.

8. Procédé selon la revendication 6 ou 7, **caractérisé en ce que** la largeur de faisceau de l'au moins un émetteur, mesurée transversalement à son axe longitudinal, est plus faible que l'épaisseur de la pièce à usiner ou la largeur de la surface (20) à revêtir.

9. Procédé selon l'une quelconque des revendications 6 à 8, **caractérisé en ce que** la pièce à usiner est chauffée plus fortement au milieu de la surface (20) à revêtir que sur ses bords.
